Europäisches Patentamt

European Patent Office

Office européen des brevets

(19)

(11) Numéro de publication: **0 056 275**
**B1**

(12) **FASCICULE DE BREVET EUROPEEN**

(45) Date de publication du fascicule du brevet: **18.12.85**

(51) Int. Cl.⁴: **H 02 H 9/06**

(21) Numéro de dépôt: **82100157.5**

(22) Date de dépôt: **12.01.82**

(54) **Dispositif de protection d'une ligne électrique contre des perturbations à front très raide.**

(30) Priorité: **14.01.81 FR 8100538**

(43) Date de publication de la demande:
**21.07.82 Bulletin 82/29**

(45) Mention de la délivrance du brevet:
**18.12.85 Bulletin 85/51**

(84) Etats contractants désignés:
**BE CH DE FR GB IT LI NL SE**

(56) Documents cités:
**FR-A-2 200 650**
**US-A-3 274 447**

(73) Titulaire: **LES CABLES DE LYON Société anonyme dite:**
**170 quai de Clichy**
**F-92111 Clichy Cedex (FR)**

(72) Inventeur: **Sirel, Michel**
**5, rue Léon Cogniet**
**F-75017 Paris (FR)**

(74) Mandataire: **Weinmiller, Jürgen et al**
**Zeppelinstrasse 63**
**D-8000 München 80 (DE)**

Courier Press, Leamington Spa, England.

## Description

La présente invention concerne un dispositif de protection d'une ligne électrique à basse tension contre des perturbations de tension à front très raide, comprenant un coffret à plusieurs étages en série disposés en série et en amont par rapport à la ligne à protéger, au moins certains étages du coffret contenant des composants limiteurs.

On a déjà proposé des dispositifs de ce genre, notamment pour la protection de lignes électriques à basse tension, d'énergie, de mesure ou de transmission, contre les effets électromagnétiques d'explosions nucléaires. Ils ne permettant cependant de protéger la ligne électrique que contre des impulsions d'une vitesse de montée en tension d'au plus 1 kV/ nanoseconde. Or, on peut concevoir que des explosions nucléaires de forte puissance puissent induire des perturbations d'une vitesse de montée de l'ordre d'une dizaine de kilovolts par nanoseconde ou plus. Les éclateurs de ces dispositifs risquent de ne pas amorcer quand ils sont soumis à des perturbations d'un temps de montée aussi bref, ou n'amorcer qu'à des tensions très élevées, et ne jouent donc plus leur rôle de protection.

Le dispositif selon l'invention a pour but d'assurer une protection efficace de lignes électriques à basse tension contre des perturbations à front très raide d'une vitesse de montée de l'ordre d'une ou plusieurs dizaines de kilovolts par nanoseconde, correspondant à un niveau d'énergie de l'ordre de centaines de kilojoules et à des puissances permanentes de l'ordre de la centaine de kW avec des intervalles de temps très rapprochés. Ce dispositif présente une impédance shunt élevée et ne laisse des perturbations résiduelles que de quelques centaines de volts.

Le dispositif selon l'invention est caractérisé en ce qu'il comprend, en amont du coffret, une portions de conducteur électrique en série par rapport à la figure à protéger et entourée par un tube métallique clos à ses extrémités par des fenêtres isolantes et séparé du conducteur par un isolant solide ou gazeux, la portion de conducteur et le tube constituant une ligne coaxiale atténuant la pente des perturbations avant leur entrée dans le coffret, chaque étage du coffret atténuant ensuite graduellement ces perturbations.

Il répond en outre de préférence à au moins l'une des ceractéristiques suivantes:

— Les étages contenant des composants limiteurs comportent deux enceintes concentriques, une enceinte externe en acier et une enceinte interne en métal bon conducteur non magnétique à l'intérieur de laquelle sont disposés le ou les composants limiteurs

— Un plancher ou une barre en métal bon conducteur non magnétique forme terre pour l'ensemble des étages du coffret.

— Le coffret comprend au moins trois étages, un premier étage comportant un ou plusieurs composants limiteurs tels que des éclateurs un deuxième étage comportant un ou deux composants limiteurs tels que des éclateurs, et un troisième étage comportant un seul composant limiteur tel qu'un éclateur ou une résistance variable dont la résistance décroît quand la tension appliquée augmente, les différents composants limiteurs étant disposés en shunt entre le conducteur en série par rapport à la ligne à protéger et la terre.

— Les deuxième et troisième étages comportent chacun une bobine de self-induction en série avec le conducteurs et située en amont du ou des composants limiteurs de l'étage.

— Les éclateurs d'un étage ont une tension d'amorçage plus basse que celle des éclateurs de l'étage situé amont par rapport à la ligne à protéger.

— Il comprend en outre un quatrième étage comportant un thyristor de puissance disposé en série avec le conducteur et commandé par un circuit relié à l'entrée du deuxième étage et lui amenant une impulsion de commande d'ouverture, ou bien comportant des diodes de puissance et un filtre, tous deux étant connectés en shunt entre le conducteur et la terre.

Il est décrit ci-après à titre d'exemple et en référence aux figures du dession annexé, deux dispositifs de protection de lignes d'énergie à basse tension contre des perturbations à front très raide, d'une vitesse de montée en tension d'environ 20 kV/ns.

La figure 1 représente un dispositif à quatre étages, pour la protection d'une phase d'une ligne d'énergie à basse tension dont le quatrième étage comporte un thyristor d'ouverture du circuit pendant le passage de la perturbation.

La figure 2 représente un dispositif analogue à celui de la figure 1, mais dans lequel le quatrième étage ne comporte pas de moyens d'ouverture du circuit pendant le passage de la perturbation.

La figure 3 représente la variation de la tension d'amorçage des éclateurs en fonction de leur position dans les étages du dispositif.

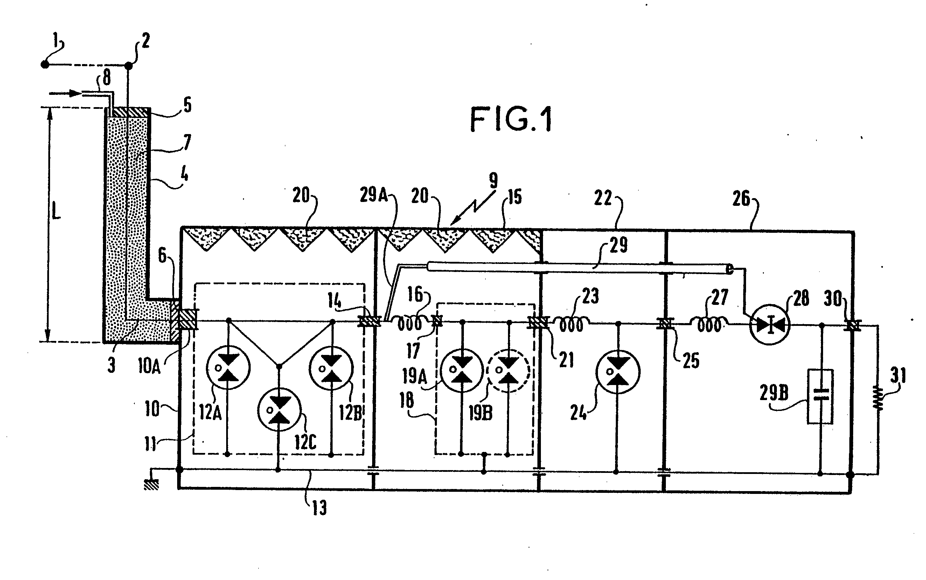

Dans la figure 1, l'impulsion perturbatrice, ainsi que la tension normale de fonctionnement, parviennent, dans une zone perturbée, d'une borne 1 à la borne d'entrée 2 du dispositif de protection de la phase en cause.

On comprendra que les deux autres phases comportent des dispositifs de protection identiques, non représentés.

L'impulsion perturbatrice de pente et de tension de crête pouvant atteindre 20 kV/ns et 500 kV, se propage le long d'un conducteur de phase 3 qui est entouré par un tube métallique 4; celui-ci est obturé à ses extrémités par les fenêtres d'étanchéité isolantes 5 et 6 en alumine ou en verre.

Le conducteur 3 est isolé du tube 4 par un isolant 7, qui peut être gazeux ou solide; l'isolant est gazeux (SF 6) lorsque la tension de la perturbation incidente atteint plusieurs centaines de kV; il est solide (par exemple polyéthylène ou alumine) pour des tensions crêtes inférieures à 200 kV. Un conduit 8 permet l'introduction de l'hexafluorure de soufre dans le tube 4.

La longueur de conducteur 3 et du tube 4, qui constituent une ligne coaxiale, a une valeur L telle que la pente $P_0$ de l'impulsion perturbatrice incidente descende à une valeur $P_1$ à la sortie du conducteur 3. La pente $P_1$ est aussi fonction de l'impédance de charge du circuit d'utilisation. Par exemple, pour une pente Po de 20 kV/ns, la pente $P_1$ tombe à 3 à 5 kV/ns pour une longueur de 2 m.

L'impulsion perturbatrice de pente $P_1$, issue du conducteur 3, pénètre dans le premier étage 10 du coffret métallique 9 par une traversée isolante 10A. Des éclateurs 12A, 12B et 12C sont disposés en shunt d'une façon symétrique, entre le conducteur de phase et la terre, constituée par un plancher en grille de cuivre 13; ils sont enfermés dans un coffret en cuivre 11, lui-même disposé dans le compartiment en acier 10, de façon à blinder à la fois électriquement et magnétiquement les éclateurs. Le nombre de ces éclateurs est fonction de l'énergie de l'impulsion incidente, et pourrait être réduit si celle-ci était plus faible.

Lorsque plusieurs éclateurs sont en parallèle, et soumis à une tension à front raide, l'un des éclateurs amorce le premier, un très court instant avant les autres. La tension de décharge de cet éclateur déclenche à son tour un deuxième éclateur et ainsi de suite.

Le conducteur de phase passe ensuite par une traversée isolante 14 dans un second compartiment blindé 15. La pentre de l'impulsion perturbatrice est réduite à l'entrée dans ce compartiment à environ 1 kV/10 ns, et la tension de crête à 10 à 20 kV. Il s'y trouve disposé une self-inductance 16, pouvant atteindre une valeur de 30 à 50 microhenrys puis, après une traversée isolante 17, un coffret 18 blindé comme le coffret 11, où se trouvent deux éclateurs 19A et 19B qui sont disposés en shunt et symétriquement entre le conducteur de phase et la terre.

Dans les compartiments 10 et 15 sont disposés des absorbants 20 de l'énergie haute fréquence qui ont pour objet d'amortir les cavités qu'ils constituent, et formés par exemple d'une matière plastique chargée de noir de carbone.

Par une traversée isolante 21 on parvient ensuite à un troisième compartiment blindé 22. La pente de l'impulsion est réduite à l'entrée de celui-ci à environ 1 kV/100 ns et la tension de crête à 3 à 5 kV. Il s'y trouve disposé une self-inductance 23 d'un valeur de 10 à 20 microhenrys, puis un éclateur 24 en shunt.

Les éclateurs 12A, 12B, 12C, 19A, 19B et 24 sont des éclateurs du type à amorçage sous des fronts d'onde très rapides. Les éclateurs 19A, 19B amorcent de préférence pour une tension plus basse que 12A, 12B, 12C de même que l'éclateur 24 amorce de préférence pour une tension plus basse que 19A et 19B.

Une traversée isolante 25 permet ensuite d'accéder à un quatrième compartiment blindé 26. La pente de l'impulsion est réduite à son entrée à environ 1 kV/microseconde et la tension de crête à environ 1 kV Il s'y trouve une self-inductance 27 de valeur inférieure à 10 microhenrys et un thyristor de puissance 28, qui est commandé par un circuit 29 relié à l'entrée du compartiment 15 par un câble coaxial 29A. Le thyristor 28 est normalement conducteur et il interrompt le circuit pendant le passage de la perturbation sous l'effet du signal transmis par le câble coaxial. Un condensateur 29B évite une chute brutale de la tension.

Une traversée isolante 30 constitue enfin la borne de sortie du dispositif de protection. La pente de la perturbation y est réduite à environ 1 kV/10 microsecondes et la tension de crête à 100—200 V.

La charge utile est représentée ici par une résistance 31 disposée entre la borne de sortie et la terre. Eille peut être enfermée dans un ouvrage blindé.

L'impédance entre le conducteur de phase et le neutre peut présenter une valeur supérieure à 0,1 Mégohm.

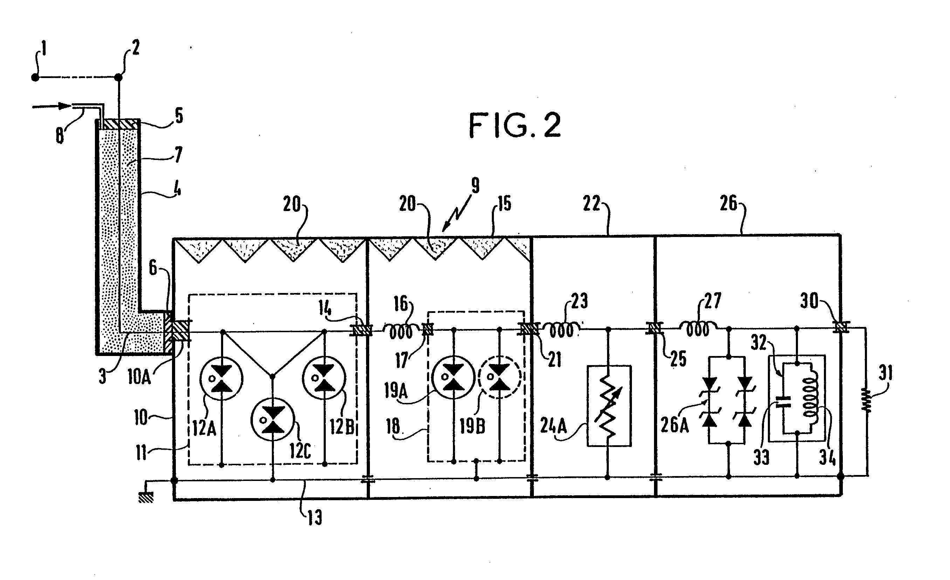

Le dispositif de protection représenté en figure 2 est identique à celui de la figure 1 en ce qui concerne la ligne coaxial d'entrée et les deux premiers étages à éclateurs, et ces parties ne seront pas décrites à nouveau.

Dans le compartiment 22, l'éclateur est remplacé par une résistance variable sensible à la tension 24A, dont la résistance augmente lorsque la tension appliquée s'élève. Celle-ci joue le même rôle que l'éclateur 24, mais peut supporter une intensité plus élevée.

Dans le compartiment 26, du fait que l'on ne désire par interrompre le circuit à l'arrivée de la perturbation, le thyristor 28 est remplacé par des diodes Zener ou trans-Zorb en parallèle 26A, elles-mêmes en parallèle avec un filtre passe-bande 32, à capacité 33 et self 34.

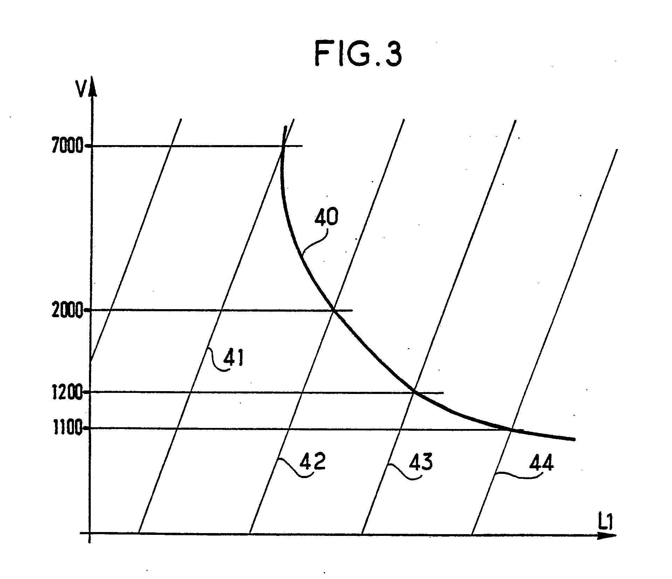

La figure 3 représente la courbe 40 donnant les tensions d'amorçage V des étages successifs en fonction de leur position L1 dans le dispositif des figures 1 ou 2, les droites 41, 42, 43, 44 correspondant à des pentes déterminées de la perturbation incidente. L'on obtient par exemple des tensions d'amorçage de 7 kV, 2 kV, 1200 V. et 1100 volts pour des pentes de 1 kV/ns, 1 kV/10 ns, 1 kV/100 ns et 1 kV/μs. L'on peut donc déterminer en fonction de la pente de la perturbation incidente et de son affaiblissement dans les étages successifs, la tension pour laquelle les éclateurs amorceront.

Sans sortir du cadre de l'invention, le nombre d'éclateurs par étage peut être modifié et la mise à la terre des coffrets peut être réalisée par une barre de cuivre s'étendant à travers ceux-ci.

**Revendications**

1. Dispositif de protection d'une ligne électrique à basse tension contre des perturbations de tension à front très raide, comprenant un coffret (9) à plusieurs étages disposé en série et en amont par rapport à la ligne à protéger (31), au moins certains étages du coffret (9) contenant des composants limiteurs, caractérisé en ce qu'il comprend, en amont du coffret, une portion de conducteur électrique (3) en série par rapport à la ligne à protéger (31) et entourée par un tube métallique (4) clos à ses extrémités par des fenêtres isolantes (5, 6) et séparé du conducteur (3) par un isolant solide ou gazeux (7), la portion de conducteur (3) et le tube (4) constituant une ligne coaxiale atténuant la pente des perturbations avant leur entrée dans le coffret (9), chaque étant du coffret (19) atténuant ensuite graduellement ces perturbations.

2. Dispositif selon la revendication 1, caractérisé en ce que certains étages (10, 15) contenant des composants limiteurs comportent deux enceintes concentriques, une enceinte externe (10, 15) en acier et une enceinte interne en métal bon conducteur non magnétique (11, 18), à l'intérieur de laquelle sont disposées le ou les composants limiteurs (12A, 12B, 12C, 19A, 19C).

3. Dispositif selon l'une des revendications 1 à 2, caractérisé en ce qu'un plancher ou une barre en métal bon conducteur non magnétique (13) forme terre pour l'ensemble des étages du coffret (9).

4. Dispositif selon l'une des revendications 1 à 3, caractérisé en ce que le coffret (9) comprend au moins trois étages, un premier étage (10) comportant un ou plusieurs composants limiteurs tels que des éclateurs (12A, 12B, 12C), un deuxième étage (15) comportant un ou deux composants limiteurs tels que des éclateurs (19A, 19B), et un troisième étage (22) comportant un seul composant limiteur tel qu'un éclateur (24, figure 1) ou une résistance variable (24A, figure 2) dont la résistance décroît quand la tension appliqué augmente, les différents composants limiteurs étant disposés en shunt entre le conducteur en série par rapport à la ligne à protéger (31) et la terre (13).

5. Dispositif selon la revendication 4, caractérisé en ce que les deuxième et troisième étages comportent chacun une bobine de self-induction (16, 23) en série avec le conducteur et située en amont du ou des composants limiteurs de l'étage.

6. Dispositif selon les revendications 4 ou 5, caractérisé en ce que les éclateurs d'un étage ont une tension d'amorçage plus basse que celle des éclateurs d'un étage situé en amont pas rapport à la ligne à protéger (31).

7. Dispositif selon l'une des revendications 4 à 6, caractérisé en ce qu'il comprend en outre un quatrième étage (26, figure 1) comportant un thyristor de puissance (28) disposé en série avec le conducteur et commandé par un circuit (29, 29A) relié à l'entrée du deuxième étage et lui amenant une impulsion de commande d'ouverture.

8. Dispositif selon l'une des revendications 4 à 6, caractérisé en ce qu'il comprend en outre un quatrième étage (26, figure 2) comportant des diodes de puissance (26A) et un filtre (32), tous deux étant connectés en shunt entre le conducteur et la terre (13).

**Patentansprüche**

1. Schutzvorrichtung für eine elektrische Niederspannungsleitung gegen Spannungsschwankungen mit sehr steiler Flanke, mit einem Kasten (9), in dem mehrere Stufen in Reihe vor der zu schützenden Leitung (31) angeordnet sind, wobei mindestens gewisse Stufen des Kastens (9) Begrenzungsbauteile enthalten, dadurch gekennzeichnet, daß sie vor dem Kasten einen elektrischen Leiterabschnitt (3) in Reihe mit der zu schützenden Leitung (31) enthält, der von einem an seinen Enden durch isolierende Fenster (5, 6) verschlossenen Metallrohr (4) umgeben ist, das von dem Leiter (3) durch ein festes oder gasförmiges Isoliermaterial (7) getrennt ist, wobei der Leiterabschnitt (3) und das Rohr (4) eine koaxialle Leitung bilden, die die Flanken der Störungen vor ihrem Eintritt in dem Kasten (9) dämpft, worauf jede Stufe des Kastens (9) diese Störungen graduell dämpft.

2. Vorrichtung nach Anspruch 1, dadurch gekennzeichnet, daß gewisse Stufen (10, 15), die Begrenzungsbauteile aufweisen, zwei konzentrische Gehäuse aufweisen, nämlich ein äußeres Gehäuse (10, 15) aus Stahl und ein inneres Gehäuse aus unmagnetischem, gut leitenden Metall (11, 18), in dessen Inneren das (die) Begrenzungsbauteil(e) (12A, 12B, 12C, 19A, 19B) angeordnet ist (sind).

3. Vorrichtung nach einem der Ansprüche 1 bis 2, dadurch gekennzeichnet, daß ein Boden oder eine Stange aus unmagnetischem, gut leitendem Metall (13) die Erde für die Gesamtheit der Stufen des Kastens (9) bildet.

4. Vorrichtung nach einem der Ansprüche 1 bis 3, dadurch gekennzeichnet, daß der Kasten (9) mindestens drei Stufen umfaßt, nämlich eine erste Stufe (10), die eines oder mehrere Begrenzungsbauteile, wie z.B. Funkenstrecken (12A, 12B, 12C) aufweist, eine zweite Stufe (15), die eines oder zwei Begrenzungsbauteile wie z.B. Funkenstrecken (19A, 19B) aufweist, und eine dritte Stufe (22), die nur ein einziges Begrenzungsbauteil wie z.B. eine Funkenstrecke (24, Fig. 1) oder einen variablen Widerstand (24A, Fig. 2) aufweist, dessen Widerstand absinkt, wenn die angelegte Spannung ansteigt, wobei die verschiedenen Begrenzungsbauteile in Ableitung zwischen dem Leiter und Erde sowie in Reihe in bezug auf die zu schützende Leitung (31) angeordnet sind.

5. Vorrichtung nach Anspruch 4, dadurch gekennzeichnet, daß die zweite und dritte Stufe je eine Selbstinduktionsspule (16, 23) in Reihe mit dem Leiter und vor der oder den Begrenzungsbauteilen der betreffenden Stufe aufweist.

6. Vorrichtung nach den Ansprüchen 4 oder 5, dadurch gekennzeichnet, daß die Funkenstrecken einer Stufe eine niedrigere Auslösespannung aufweisen als die Funkenstrecken einer Stufe, die in bezug auf die zu schützende Leitung stromaufwärts liegt.

7. Vorrichtung nach einem der Ansprüche 4 bis 6, dadurch gekennzeichnet, daß sie außerdem eine vierte Stufe (26, Fig. 1) aufweist, die einen Leistungsthyristor (28) enthält, der in Reihe mit dem Leiter angeordnet ist und von einem Kreis (29, 29A) gesteuert wird, der mit dem Eingang der zweiten Stufe verbunden ist und dem Thyristor einen Öffnungssteuerimpuls zuführt.

8. Vorrichtung nach einem der Ansprüche 4 bis 6, dadurch gekennzeichnet, daß sie außerdem eine vierte Stufe (26, Fig. 2) aufweist, die Leistungsdioden (26A) und ein Filter (32) enthält, die alle in Ableitung zwischen den Leiter und Erde (13) geschaltet sind.

## Claims

1. A device for protecting a low voltage electric line against voltage disturbances with very steep slopes, comprising a box (9) with a plurality of stages connected in series and upstream from the line to be protected (31), et least some of the stages of the box (9) containing limiter components, characterized in that it includes, upstream from the box, a portion of an electric conductor (3) connected in series to the line (31) to be protected and surrounded by a metal tube (4) which is closed at its ends by insulating windows (5, 6) and separated from the conductor (3) by a solid or gaseous insulant (7), the portion of the conductor (3) and the tube (4) constituting a coaxial line which attenuates the slope of the disturbances prior to their entering into the box (9), each stage of the box (9) then gradually attenuating these disturbances.

2. A device according to claim 1, characterized in that certain stages (10, 15) containing limiter components comprise two concentric enclosures, an outer steel enclosure (10, 15) and an inner enclosure made of a non-magnetic good conductor metal (11, 18), inside which the limiter component(s) (12A, 12B, 12C, 19A, 19B) is (are) disposed.

3. A device according to one of claims 1 and 2, characterized in that a floor or bar of a non-magnetic good conductor metal (13) constitutes the earth for all the stages of the box (9).

4. A device according to one of claims 1 to 3, characterized in that the box (9) comprises at least three stages, a first stage (10) comprising one or several limiter components such as spark-gaps (12A, 12B, 12C), a second stage (15) comprising one or two limiter components such as spark-gaps (19A, 19B) and a third stage (22) comprising only one limiter component such as a spark-gap (24, fig. 1) or a variable resistor (24A, fig. 2), the resistance of which decreases, if the applied voltage increases, the different limiter components being disposed in parallel between the conductor and the earth (13) in series with respect to the line (31) to be protected.

5. A device according to claim 4, characterized in that the second and third stages each comprise a self-inductor coil (16, 23) branched in series with the conductor and situated upstream of the limiter component(s) of the stage.

6. A device according to claim 4 or 5, characterized in that the spark-gaps of one stage have a lower breakthrough voltage than the spark-gaps of a stage situated upstream with respect to the line (31) to be protected.

7. A device according to one of claims 4 to 6, characterized in that it further comprises a fourth stage (26, fig. 1) comprising a power thyristor (28) which is disposed in series with the conductor and is controlled by a circuit (29, 29A) connected to the input of the second stage and applying to the thyristor a trigger pulse.

8. A device according to one of claims 4 to 6, characterized in that it further comprises a fourth stage (26, fig. 2) containing power diodes (26A) and a filter (32) which are shunted between the conductor and the earth (13).

FIG.1

FIG.2

0 056 275

# FIG.3